# EUROPÄISCHE PATENTSCHRIFT

(11) **EP 0 667 084 B1**
(45) Veröffentlichungstag und Bekanntmachung des Hinweises auf die Patenterteilung: **11.03.1998**
(21) Anmeldenummer: 93922860.7
(22) Anmeldetag: 27.10.1993
(51) Int. Cl.: H04Q 5/00, H04J 3/18, H04M 3/30

(54) **NACHRICHTENÜBERTRAGUNGSSYSTEM**
INFORMATION TRANSMISSION SYSTEM
SYSTEME DE TRANSMISSION D'INFORMATIONS

(30) Priorität: 27.10.1992 AT 2123/92
(43) Veröffentlichungstag der Anmeldung: 16.08.1995
(73) Patentinhaber: SEMCOTEC HANDELSGESELLSCHAFT M.B.H., A-1030 Wien (AT)
(72) Erfinder: KAUSEL, Wilfried, A-1180 Wien (AT)
(74) Vertreter: Gibler, Ferdinand, Dipl.Ing. Dr. techn.
(86) Internationale Anmeldenummer: AT9300165
(87) Internationale Veröffentlichungsnummer: WO9410809

(56) Entgegenhaltungen:
- WO-A-91/20141
- NTG-FACHBERICHTE, Band 64: Neue Entwicklungen in der NachrichtenUbertragung - Vor- trUge der NTG-Fachtagung vom 17.-19. April 1978 in MUnchen VDE-Verlag GmbH, Berlin A. NORZ, P.C. ULRICH "Konzepte moderner Konzentra- torsysteme fUr das Teilneh- meranschlussnetz", Seiten 64- -68,

## Beschreibung

Die Erfindung bezieht sich auf ein Nachrichtenübertragungssystem, insbesondere Telefonsystem, bei dem Teilnehmer über eine Leitung mit einem Wählamt verbindbar sind, wobei am wählamtseitigen und am teilnehmerseitigen Ende der Leitung je ein bidirektionaler Multiplexer bzw. Demultiplexer über eine ebenfalls bidirektionale Modemschaltung angeschaltet ist, die die Daten entsprechend der vorgesehenen Übertragung moduliert und demoduliert, und daß an die Multiplexer bzw. Demultiplexer gegebenenfalls bidirektionale Kompressor- bzw. Dekompressorschaltungen angeschlossen sind und an denen die Teilnehmer jeweils über einen Vorwärts- und einen Rückwärtskanal und zumindest einem bidirektionalen Analog-Digitalwandler (CODEC), vorzugsweise einen SLAC (bidirektionaler Analog-Digitalwandler (CODEC) mit Teilnehmer-Schnittstellenschaltungen (SLIC)) bzw. eine Vermittlungseinrichtung des Wählamtes über Ansteuerschaltungen angeschlossen sind.

Ein solches System wurde durch die WO 91/20141 bekannt. Bei solchen Systemen ergeben sich Probleme hinsichtlich der Ortung von Fehlern. So beschränkt sich bei diesen Systemen die Fehlerdiagnose bezüglich der Teilnehmerleitungen auf sehr spezielle Einzelfalle, wie z.B. die Rufstrom-Schwellwertüberwachung, Kurzschlußerkennung u.dgl. In manchen Fällen werden Relais eingesetzt, um im Fehlerfall zumindest bevorzugte Teilnehmer galvanisch mit dem Amt zu verbinden. In allen Fällen ergibt sich bei der Umstellung von Telefonsystemen mit Direktanschluß des Teilnehmers an eine Amtsleitung, z.B. über Hebdrehwähler, auf das oben erwähnte System eine krasse Einschränkung der Möglichkeit der wählamtsseitigen Wartungs- und Fehlerdiagnosemöglichkeiten.

In der Veröffentlichung NTG-Fachberichte, Band 64, 1978, Seiten 64 bis 68 ist zur Verbesserung der wähleramtsseitigen Wartungs- und Fehlerdiagnosemöglichkeiten vorgeschlagen, zwischen den Teilnehmern und den diesen zugeordneten Teilnehmerschaltungen eine Meß-, Regel- oder Steuerschaltung anzuordnen bzw. diese in die Teilnehmerschaltungen zu integrieren.

Auf diese Weise ist es möglich, die zum Teilnehmer führenden Leitungen vom Wählamt aus zu überwachen.

Bekannte Nachrichtensysteme dieser Art haben jedoch den Nachteil, daß die einzelnen Wartungs- und Diagnosefunktionen nur in sehr zeitaufwendiger Weise in Anspruch genommen werden können.

Ziel der Erfindung ist es, diesen Nachteil zu vermeiden und ein Nachrichtenübertragungssystem der eingangs erwähnten Art vorzuschlagen, bei dem die Wartungs- und Diagnosemöglichkeiten auf einfache Weise gesteuert werden können.

Erfindungsgemäß wird dies dadurch erreicht, daß zwischen jedem Teilnehmer und dem diesem zugeordneten CODEC, SLIC bzw. SLAC eine Meß-, Regel- oder Steuerschaltung angeordnet bzw. mit dem CODEC, SLIC bzw. SLAC wenigstens zum Teil integriert ist, und daß an den zu den Teilnehmern führenden Leitungen steuerbare Schalter angeschlossen sind, die eine signalmäßige Verbindung des Vorwärtskanals mit dem Rückwärtskanal desselben oder bei Mehrkanallösungen, z.B. eines anderen, Teilnehmers ermöglicht.

Auf diese Weise ist es möglich, vom Wählamt aus bei laufenden Gesprächen auf einem anderen Anschluß testweise mithören oder auch mitsprechen zu können, oder Spannungssignale oder Stromsignale an verschiedenen Punkten des Übertragungsweges zu verfolgen oder in diesen Punkten auch gezielt stimulieren zu können. Die Übertragung der entsprechenden Werte ist durch die Breitbandigkeit des Sprechkanals und des Wartungskanals möglich.

Mit den verwendeten Meß-, Regel- und Steuerschaltungen können dadurch Leckströme der Teilnehmerleitungen bei aufgelegtem Teilnehmerapparat, d.h. die Adern zueinander und gegen Erde, der Leitungswiderstand bei abgehobenem Handapparat, der Rufstrom und die Impedanz bei aufgelegtem Handapparat, die Symmetrie, Differenzspannungen, Differenzströme, wie auch Gebührenimpulse, der Gleichtaktstrom, der Längswechselstrom, die ordnungsgemäße Funktion von Leitungssicherungen und Blitzschutzelementen, und die Umgebungstemperatur erfaßt werden.

Ein weiterer Nachteil bekannter Nachrichtensysteme dieser Art ist es, daß in diesen bereits vorhandene Regelgrößen für eine Überwachung nicht genutzt werden.

Ein weiteres Ziel der Erfindung ist es daher, ein Nachrichtenübertragungssystem der eingangs genannten Art zu schaffen, bei welchem eine vorliegende Regelabweichung zur Überwachung genutzt werden kann.

Dies wird erfindungsgemäß dadurch erreicht, daß zwischen jedem Teilnehmer und dem diesem zugeordneten CODEC. SLIC bzw. SLAC eine Meß-, Regel- oder Steuerschaltung angeordnet bzw. mit dem CODEC, SLIC bzw. SLAC wenigstens zum Teil integriert ist, und daß teilnehmerseitig eines jeden SLAC's ein am Vorwärts- und Rückwärtskanal angeschlossener Koppler, vorzugsweise ein Transformator mit Trennkondensator angeordnet ist, der mit der Regelschaltung verbunden ist. die mit einer den Sollgleichstrom mit dem Istgleichstrom vergleichenden Vergleichsschaltung, wie z.B. eine Differenzschaltung, ein Komparator oder dgl. verbunden ist.

Dies ermöglicht es auf einfache Weise die Regelabweichung als Meßwert für eine Systemüberwachung zu nutzen.

Dabei kann weiters vorgesehen sein, daß die Regelschaltung eine das Vorzeichen des Ausgangssignales des vorgeschalteten Komparators erfassende Schaltung, einen dieser nachgeschalteten digitalen Integrator, ein digitales Filter und einen Digital/Analog-Wandler umfaßt.

Auf diese Weise läßt sich die Speisespannung auf einfache Weise überwachen und regeln.

Ein weiteres Ziel der Erfindung ist es, durch ein eingangs genanntes Nachrichtenübertragungssystem auf einfache Weise Meßdaten erfassen und an das Wählamt weiterleiten zu können.

Dies wird erfindungsgemäß dadurch erreicht, daß zwischen jedem Teilnehmer und dem diesem zugeordneten CODEC, SLIC bzw. SLAC eine Meß-, Regel- oder Steuerschaltung angeordnet bzw. mit dem CODEC, SLIC bzw. SLAC wenigstens zum Teil integriert ist, und daß in jedem SLAC zumindest ein Strom- und/oder ein Spannungsmesser integriert ist bzw. sind.

Auf diese Weise können die wesentlichsten Meßdaten sehr einfach erfaßt und an das Wählamt übermittelt werden.

Die Erfindung wird nun anhand der Zeichnung näher erläutert. Dabei zeigen:
Fig. 1 die Teilnehmerseite eines erfindungsgemäßen Nachrichtenübertragungssystems,
Fig. 2 die zugehörige Wählamtsseite mit einem Wählamt mit analogen Anschlüssen,
Fig. 3 die zugehörige Wählamtsseite mit einem Wählamt mit digitalen Anschlüssen,
Fig. 4 die Teilnehmerseite eines weiteren erfindungsgemäßen Nachrichtenübertragungssystems,
Fig. 5 die zu diesem weiteren System zugehörige Wählamtsseite mit einem Wählamt mit analogen Anschlüssen,
Fig. 6 eine Variante zur Ausführung nach der Fig. 5,
Fig. 7 bis 12 verschiedene Möglichkeiten der Ausbildung der Teilnehmeranordnung,
Fig. 13 eine Schaltung zur Spannungsversorgung der Teilnehmer,
Fig. 14 schematisch einen SLAC mit angeschalteter Meßschaltung,
Fig. 15 eine Variante der Anschaltung der Meßschaltung,
Fig. 16 einen SLAC mit angeschalteter Regelschaltung,
Fig. 17 eine Regelschaltung und
Fig. 18 ein weiteres Detail der Erfindung.

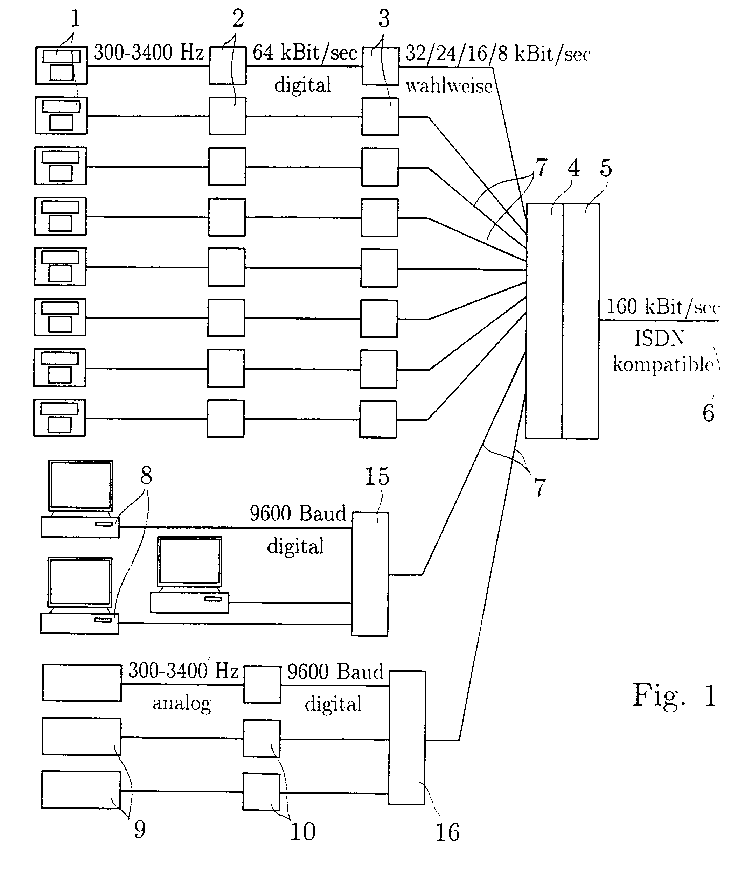

Gemäß Fig. 1 sind Teilnehmerapparate 1 mit SLACs (bidirektionale Analog-Digital-Wandler 2 mit Teilnehmer-Schnittstellenschaltungen) verbunden, die einerseits die von den Teilnehmerapparaten 1 kommenden analogen Signale, wobei diese Signale in der Regel einen Frequenzbereich von 300Hz bis 3400Hz aufweisen, in digitale Signale umwandeln und andererseits die von mit den SLACs 2 verbundenen bidirektionalen Kompressor/Dekompressorschaltungen 3 kommenden digitalen Signale in analoge Signale umwandeln, die den Teilnehmerapparaten 1 zugleitet werden.

Dabei liefern die SLACs 2 digitale Signale, die mit einer Übertragungsrate von z.B. 64kBit/sec zu der entsprechenden Kompressor/Dekompressorschaltung 3 übertragen werden.

Diese Kompressor/Dekompressorschaltungen 3 arbeiten insoferne bidirektional als sie die von den SLACs 2 kommenden Signale komprimieren und die vom Multiplexer 4 kommenden komprimierten digitalen Signale dekomprimieren und dann ihrerseits den SLACs 2 zuleiten.

Dabei komprimieren die bidirektionalen Kompressor/Dekompressorschaltungen 3 die von den SLACs 2 ankommenden Signale mit einer Rate von 64kBit/sec auf 32kBit/sec, 24kBit/sec oder 16kBit/sec je nach Kompressionsalgorithmus oder Qualitätsansprüchen. Die Dekompression erfolgt entsprechend umgekehrt.

Der Mulitplexer/Demultiplexer 4 arbeitet ebenfalls bidirektional, indem er einerseits die von den Teilnehmern kommenden Signale im Multiplexerbetrieb zu einem Signal verarbeitet und andererseits im Demultiplexerbetrieb die von der Leitung 6, bzw. die von der mit dieser verbundenen Modemschaltung 5 kommenden Signale auf die einzelnen Anschlußleitungen 7 aufteilt. Über die Leitung 6 werden neben den Gesprächs- und Übertragungsdaten auch noch vermittlungstechnische Informationen wie z.B. Wählimpulse, Gebührenimpulse bzw. Durchwahlimpulse zusätzlich übertragen.

An dem bidirektionalen Multiplexer/Demultiplexer 4 sind neben den Teilnehmerapparaten 1 auch noch drei Computer 8 über einen bidirektional arbeitenden Multiplexer/Demultiplexer 15 angeschlossen ebenso wie drei Telekopierer 9. An den Ausgang jedes Telekopierers 9 ist ein Neutralisationsmodem 10 angeschlossen, das die Wirkung des in den Telekopierern 9 eingebauten Ausgangsmodems wieder aufhebt. Über einen bidirektional arbeitenden Multiplexer/Demultiplexer 16 sind diese drei Telekopierer 9 an den Hauptmultiplexer/Demultiplexer 4 angeschlossen.

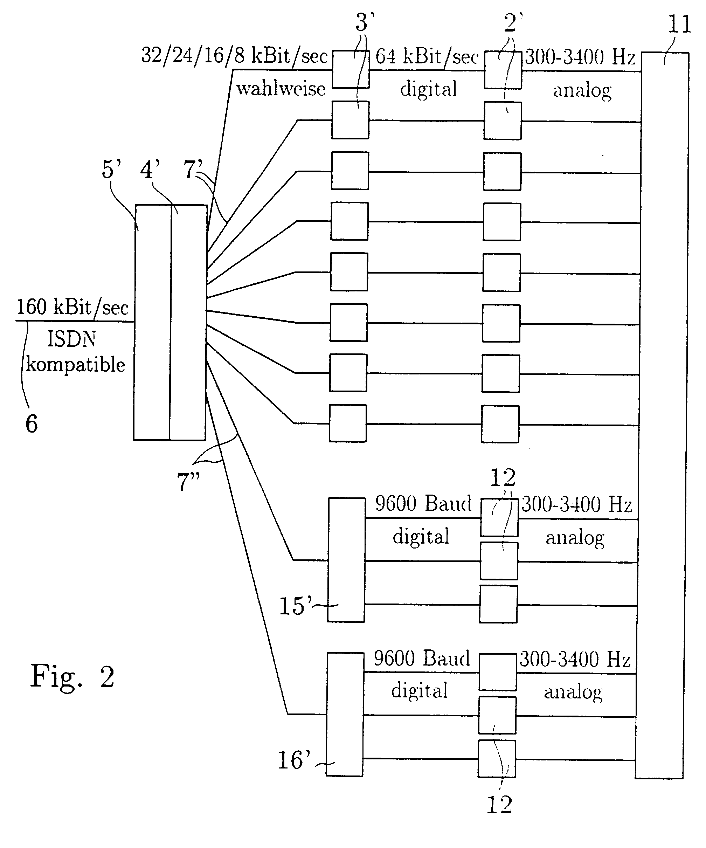

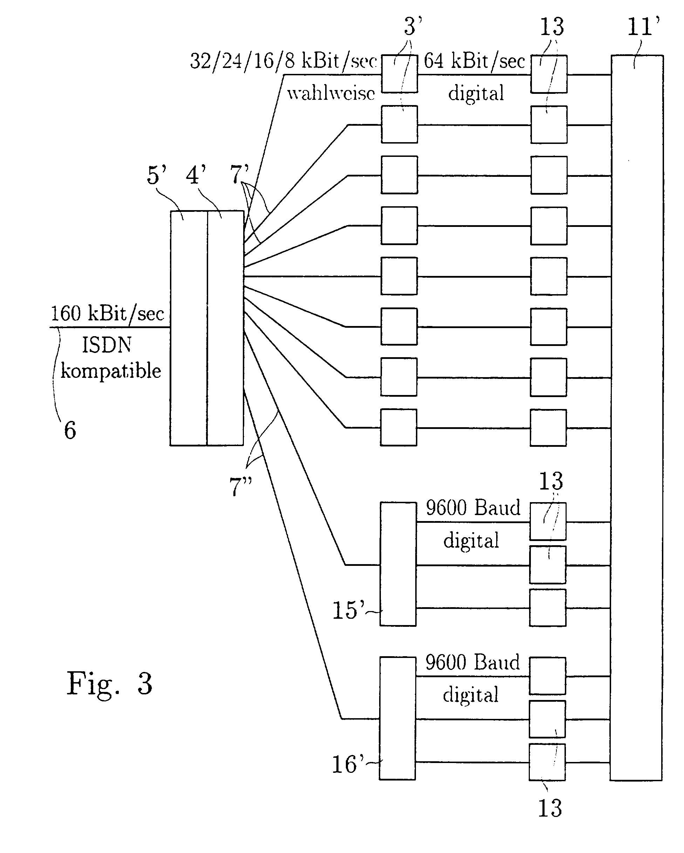

Wählamtsseitig ist, wie aus den Fig.2 und 3 zu ersehen ist, an der Leitung 6 eine Modemschaltung 5' angeschlossen, wobei die Modemschaltungen 5, 5' die für die Übertragung der komprimierten und aufbereiteten Signale erforderliche Modulation bzw. Demodulation bewirken. Arbeitet das System nach der CCITT-Norm, dann kann das Datenformat auf der Leitung 6 dem von dieser Norm für die ISDN-U Bus-Schnittstelle angegebenen Standard entsprechen.

Die Modemschaltung 5' ist mit einem bidirektionalen Multiplexer/Demultiplexer 4' verbunden, der mit einem Teil seiner Ausgangsleitungen 7' mit bidirektionalen Kompressor/Dekompressorschaltungen 3' verbunden ist.

Im Falle einer Vermittlungseinrichtung 11 mit analoger Signalansteuerung sind die Kompressor/Dekompressorschaltungen 3' mit SLACs 2' verbunden, die ihrerseits mit der Vermittlungseinrichtung 11 verbunden sind, und diese mit analogen Signalen ansteuern.

Weitere Ausgangsleitungen 7" sind gemäß Fig. 2 u.a. über einen weiteren den Datenleitungen der Computer 8 zugeordneten, bidirektional arbeitenden Multiplexer/Demultiplexer 15' sowie über einen weiteren den Datenleitungen der Telekopierer 9 zugeordneten, bidirektional arbeitenden Multiplexer/Demultiplexer 16' mit Modems 12 verbunden, die der Vermittlungseinrichtung 11 mit analoger Signalansteuerung vorgeschaltet sind und die von der Leitung 6 kommenden digitalen Signale in analoge Signale umwandeln.

Bei einer Vermittlungseinrichtung 11' mit digitaler Signalansteuerung, wie sie in der Fig.3 dargestellt ist. sind die Kompressor/Dekompressorschaltungen 3' mit Teilnehmerschaltungen 13 verbunden, an deren Ausgängen digitale Signale auftreten. Bei diesen Teilnehmerschaltungen kann es sich um die bei digitalen Wahlämtern üblichen. in Form von Karteneinschüben vorliegenden Teilnehmerschaltungen handeln, die insoferne modifiziert sind. als sie keinen A/D Wandler aufweisen. Die von den Computern 8 zugeordnete Ausgangsleitung 7" des bidirektional arbeitenden Hauptmultiplexers/Demultiplexers 4' ist an einen bidirektional arbeitenden Multiplexer/Demultiplexer 15 und eine den Telekopierern 9 zugeordnete Ausgangsleitung 7" an einen bidirektional arbeitenden Multiplexer/Demultiplexer 16' angeschlossen. Die Ausgänge dieser Multiplexer/Demultiplexer 15', 16' sind direkt an die Teilnehmerschaltungen 13 angeschlossen, wobei letztere eine Anpassung der ankommenden digitalen Signale an die Erfordernisse der Vermittlungseinrichtung 11' ermöglichen.

Die Hauptmultiplexer/Demultiplexer 4, 4' können alternativ auch so konzipiert sein, daß die den Geräten 8 bzw. 9 zugordneten Multiplexer/Demultiplexer 15, 15' bzw. 16, 16' entfallen können und die Hautpmultiplexer/Demultiplexer 4, 4' deren Funktion übernehmen.

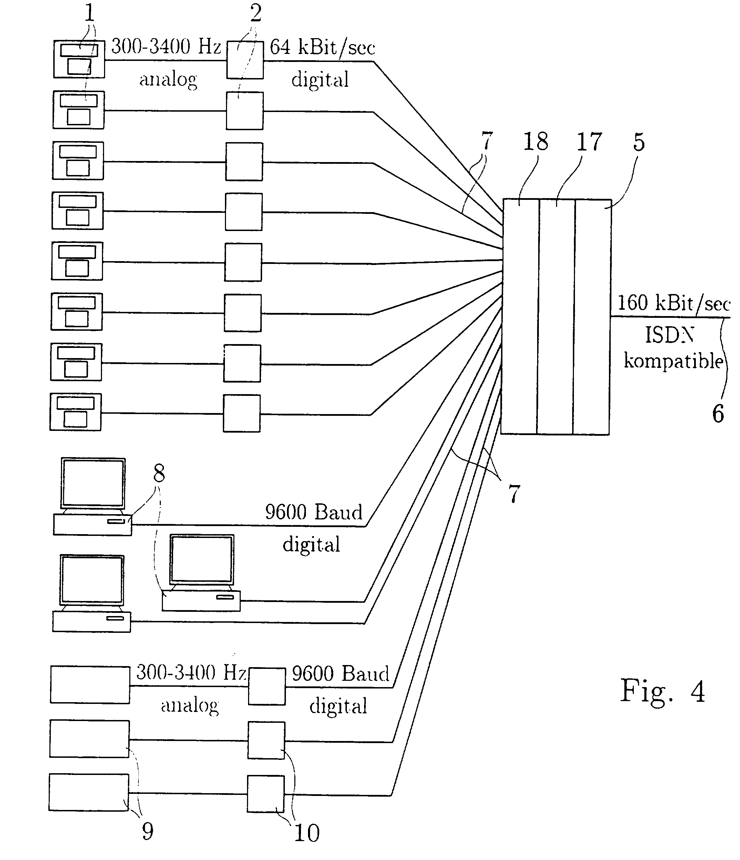

Die in den Fig. 4 bis 6 gezeigte Erfindungsvariante unterscheidet sich von jener nach den Fig. 1 bis 3 dadurch, daß die bidirektionale Kompression/Dekompression zentral erfolgt. Hiezu werden die Ausgänge der SLACs 2 direkt an den Multiplexer/Demultiplexer 18 angeschlossen, ebenso wie die digitalen Datenausgänge der Computer 8 und die Ausgänge der den Telekopiergeräten 9 zugeordneten Modems 10.

An den Multiplexer/Demultiplexer 18 ist eine bidirektionale Kompressor/Dekompressorschaltung 17 angeschlossen, an deren Ausgang der Eingang der Modemschaltung liegt; die Leitung 6 ist wieder mit dem Ausgang der Modemschaltung verbunden.

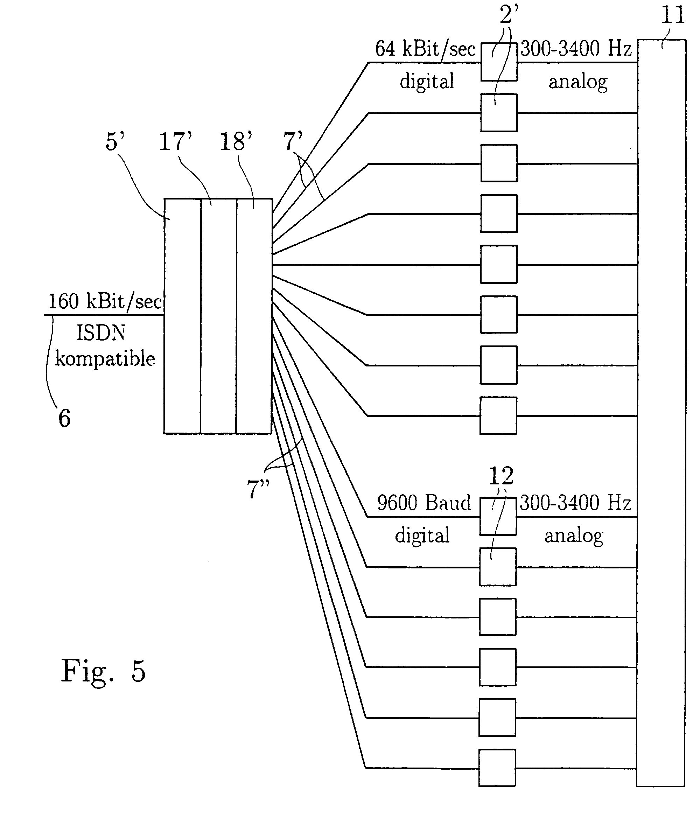

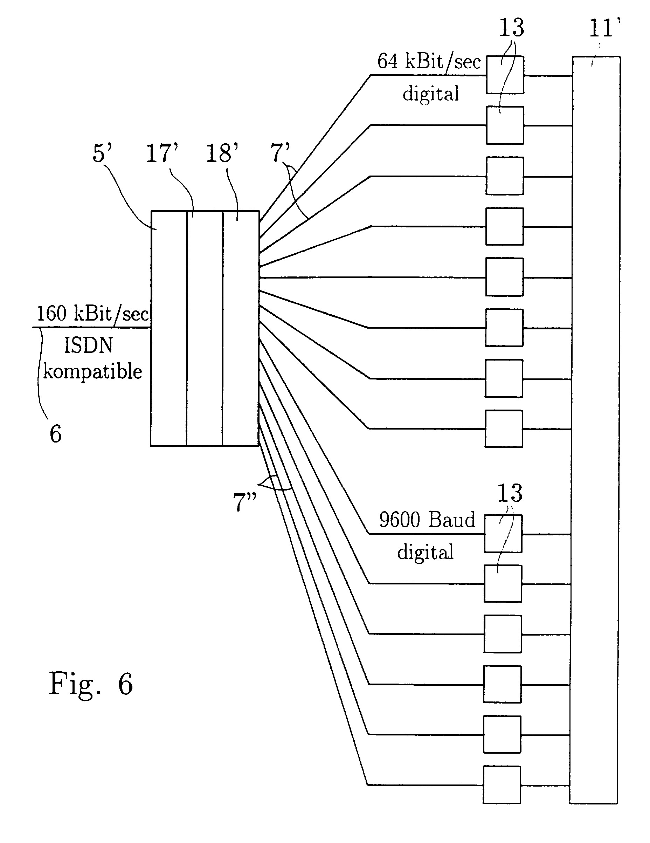

Den wählamtsseitigen Teil dieser Erfindungsvariante zeigt Fig.5 für den Falle eines Wählamtes mit analoger Signalansteuerung und Fig.6 für den eines Wählamtes mit digitaler Signalansteuerung. In beiden Fällen, Fig. 5 und 6, ist das wählamtsseitige Ende der Leitung 6 an die Modemschaltung 5', diese an eine bidirektionale Kompressor/Dekompressorschaltung 17' und diese an einen bidirektionalen Multiplexer/Demultiplexer 18' angeschlossen.

Die den Gesprächsteilnehmern entsprechenden Ausgänge des Mulitplexers/Demultiplexers 18' sind gemäß Fig.5 über die Datenleitungen 7' direkt an die SLACs 2' und die den Geräten 8, 9 entsprechenden Ausgänge des Multiplexers/Demultiplexers 18' über die Leitungen 7" direkt an die Modems 12 angeschlossen.

Gemäß Fig. 6 sind die Datenleitungen 7' und 7" vom Multiplexer 18' direkt an die Teilnehmerschaltungen 13 mit digitalem Signalausgang geführt.

Ansonsten entsprechen einander die beiden Alternativen des erfindungsgemäßen Systems, was durch gleiche Bezugszeichen zum Ausdruck gebracht ist.

Zur genauen Definition der Arbeitsweise "bidirektional" ist nachstehend noch folgendes zusammenfassendes Schema des Betriebsverhaltens der einzelnen, durch ihre Bezugsziffern ausgewiesenen Schaltungen angegeben.

| Schaltungen arbeiten als | | | | | | |
|---|---|---|---|---|---|---|
| Datenübertragung von | A/D Wandler | Kompressor | Dekompressor | Multiplexer | Demultiplexer | D/A Wandler |
| Teilnehmer zu Wählämt | 2 | 3,17 | 3',17' | 4,15,16,18 | 4',15',16',18' | 2',12 |
| Wählamt zu Teilnehmer | 2',12 | 3',17' | 3,17 | 4',15',16',18' | 4,15,16,18 | 2 |

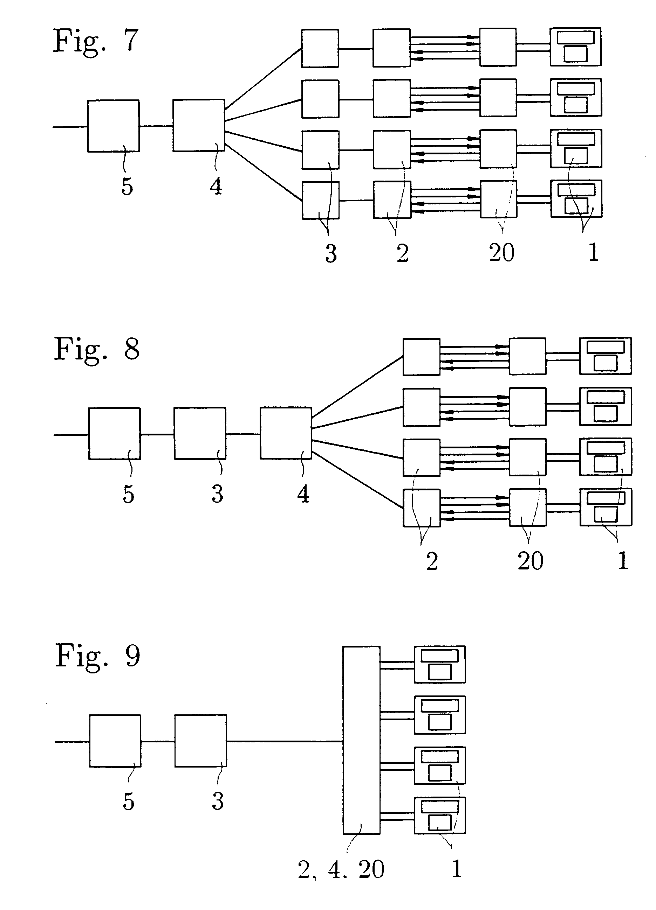

Die Fig. 7 bis 11 zeigt verschiedene Anordnungen der verschiedenen Bauteile bei den Teilnehmern.

Bei der Anordnung nach der Fig. 7 ist die Modemschaltung 5 mit einem Multiplexer/Demultiplexer 4 verbunden, an dem mehrere Kompressor/Dekompressorschaltungen 3 angeschlossen sind, die ihrerseits mit je einem Analog/Digitalwandler 2 verbunden sind. Diese Wandler 2 sind mit Teilnehmerleitung-Schnittstellenschaltungen 20 ausgangsseitig verbunden, an denen die Teilnehmerapparate angeschlossen sind.

Dieser Aufbau ist sehr einfach gestaltet, doch ergibt sich bei dieser der Nachteil, daß relativ aufwendige und teure Bauteile erforderlich sind.

Die Schaltung nach der Fig. 8 unterscheidet sich von jener nach der Fig. 7 dadurch, daß eine Kompressor/Dekompressorschaltung 3 zwischen der Modemschaltung 5 und dem Multiplexer/Demultiplexer 4 geschaltet ist, wobei die Analog/Digitalwandler 2 an dem Multiplexer/Demultiplexer 4 angeschlossen sind.

Bei dieser Ausführungsform ergibt sich eine sehr günstige Lösung, da mit einen geringen Anzahl von Bauteilen das Auslangen gefunden wird. Dabei ist es auch möglich den Multiplexer/Demultiplexer 4 samt den Wandlern 2 und den Schnittstellenschaltungen 20 als integrierter Bauteil auf einem Chip anzuordnen, wie dies in der Fig. 9 angedeutet ist.

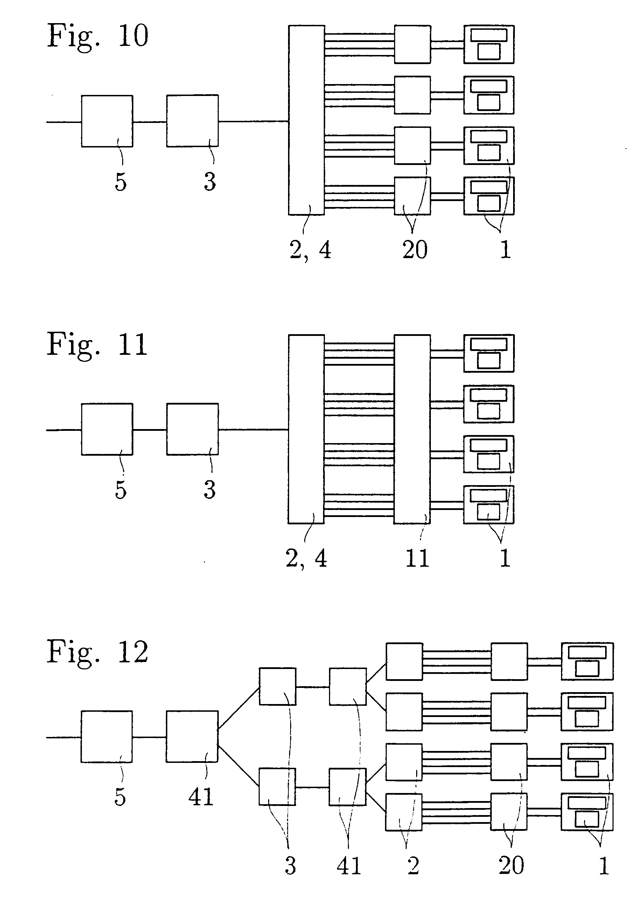

Bei der Ausführungsform nach der Fig. 10, die im wesentlichen jener nach der Fig. 8 entspricht, ist der Multiplexer/Demultiplexer 4 mit den Analog/Digitalwandler 2 integriert.

Bei der Ausführungsform nach der Fig. 11 ist die Modemschaltung 5 mit einer Kompressor/Dekompressorschaltung 3 verbunden, die mit einem Multiplexer/Demultiplexer 4 verbunden ist. Dieser Multiplexer/Demultiplexer 4 ist mit Analog/Digitalwandlern 2 integriert und mit einer Vermittlungseinrichtung 11 verbunden.

Bei der Ausführungsform nach der Fig. 12 ist die Modemschaltung 5 mit einem Zweikanalmultiplexer/Demultiplexer 41 verbunden, der mit zwei Kompressor/Dekompressorschaltungen 3 verbunden ist. Diese letzteren sind mit weiteren Zweikanalmultiplexer/Demultiplexer 41 verbunden, an denen die Analog/Digitalwandler 2 angeschlossen sind, die ihrerseits mit den Schnittstellenschaltungen 20 verbunden sind, an denen die Teilnehmerapparate angeschlossen sind.

Bei dieser Lösung kann eine Komprimierung und Dekomprimierung sehr einfach durchgeführt werden, da sich mathematisch eine 2-Kanal-Komprimierung sehr einfach durchführen läßt, wogegen eine 4-Kanal-Komprimierung nur mit großem Aufwand durchgeführt werden kann.

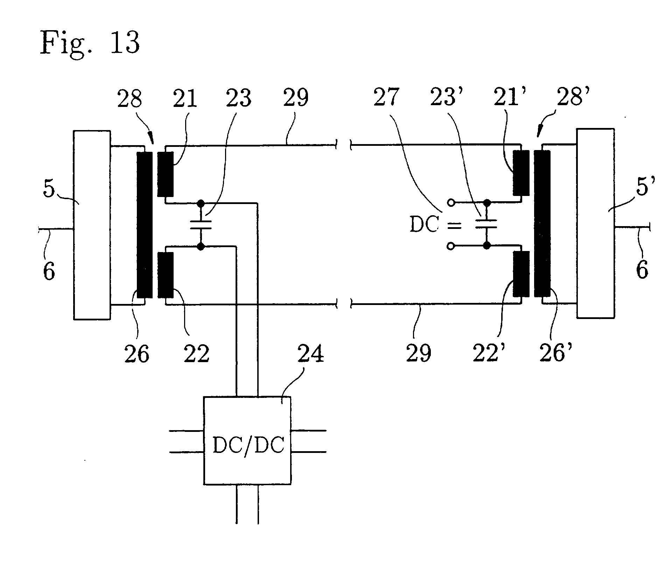

Die Fig. 13 zeigt eine Schaltung zur Spannungsversorgung der Teilnehmerschaltung. Dabei ist an die amtsseitige Modemschaltung 5' ein Übertrager 28' angeschlossen. Dieser weist eine Primärwicklung 26' und zwei Sekundärwicklungen 21', 22' auf, wobei diese beiden Sekundärwicklungen gleich aufgebaut und über einen Kondensator 23' miteinander verbunden sind. Dabei sind die Elektroden des Kondensators 23' mit einer Gleichspannungsquelle 27 verbunden.

An der teilnehmerseitigen Modemschaltung 5 ist ebenfalls ein Übertrager 28 angeschlossen, der gleich wie der Übertrager 28' ausgebildet ist. Allerdings ist an dem Kondensator 23 des Übertragers 28 ein DC/DC-Wandler angeschlossen, an den die verschiedenen Verbraucher der Teilnehmerschaltung angeschlossen sind. Dabei sind die Enden der beiden Sekundärwicklungen 21, 22, bzw. 21', 22' über Verbindungsleitungen 29 miteinander verbunden. Dadurch ist es moglich über diese Verbindungsleitungen nicht nur die Signale sondern auch die zum Betrieb der Teilnehmerschaltung erforderliche Versorgungsspannung zu übertragen. Dadurch kann auf die Anordnung einer Batterie zur Lieferung der Versorgungsspannung beim Teilnehmer verzichtet werden.

Ferner ist darauf hinzuweisen, daß die Erfindung auf die Verwendung von bidirektionalen Kompressor- bzw. Dekompressorschaltungen nicht beschränkt ist, sie ist gleichermaßen z.B. auch auf ein Multiplexsystem mit zwei Teilnehmern - entsprechende Breitbandigkeit vorausgesetzt - auch für mehrere Teilnehmer, anwendbar.

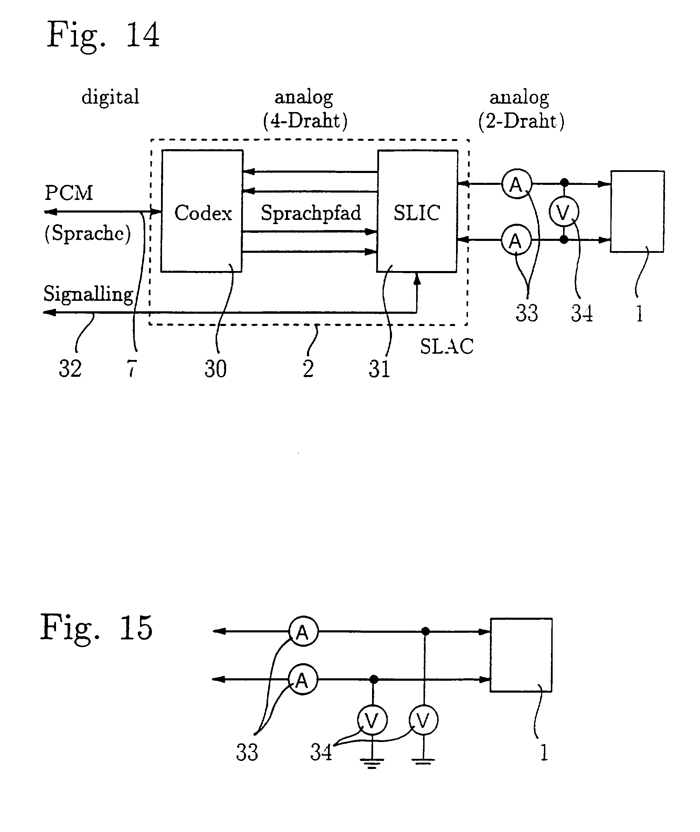

Die Fig. 14 zeigt einen SLAC 2 (Teilnehmerleitung-Anschaltkreis) in größerem Detail. Dieser SLAC 2 weist einen Digital/Analog-Wandler 30 auf, der mit einer Leitung 7 verbunden ist. Weiters ist der Digital/Analog-Wandler 30 über eine Vierdraht-Verbindung mit einer Teilnehmer-Schnittstellenschaltung 31 (SLIC) verbunden, an die weiters eine Signalleitung 32 angeschaltet ist. In den beiden zu dem zugeordneten Teilnehmer führenden, als Vorwärts- und Rückwärtskanal dienenden Leitungen, die für analoge Signale vorgesehen sind, sind Strommesser 33 und parallel zu diesen ein Spannungsmesser 34 angeordnet.

Die Variante der Anschaltung nach der Fig. 15 unterscheidet sich von jener nach der Fig. 14 lediglich dadurch, daß die Spannung der beiden Leitungen gegen Masse gemessen wird, statt zwischen den beiden Leitungen.

Grundsätzlich ist es auch möglich mit lediglich einem Spannungsmesser auszukommen, der abwechselnd zwischen die beiden Leitungen oder zwischen je eine Leitung und Masse geschaltet wird. Dabei können die Strom- und Spannungsmesser in einfachster Weise durch Widerstände gebildet sein.

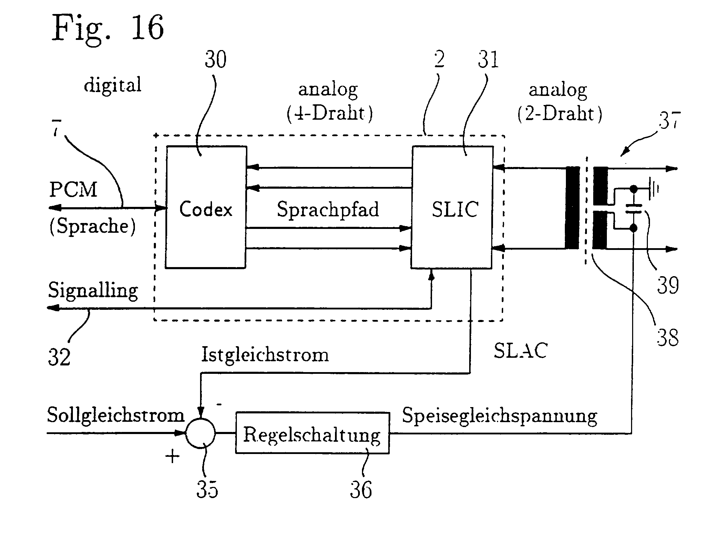

Bei der Ausführungsform nach der Fig. 16 ist an der Teilnehmer-Schnittstellenschaltung 31 außer der Signalleitung 32 auch noch eine weitere Leitung mit einem Komparator 35 verbunden, um diesen mit dem Istgleichstrom zu versorgen. Weiters ist dieser Komparator mit dem Sollgleichstrom beaufschlagt. Dieser Komparator 35 ist ausgangsseitig mit einer Regelschaltung 36 verbunden, die mit einer Kopplungsschaltung 37 verbunden ist.

Diese Kopplungsschaltung 37 ist beim dargestellten Ausführungsbeispiel durch einen Transformator 38 und einen Trennkondensator 39 gebildet.

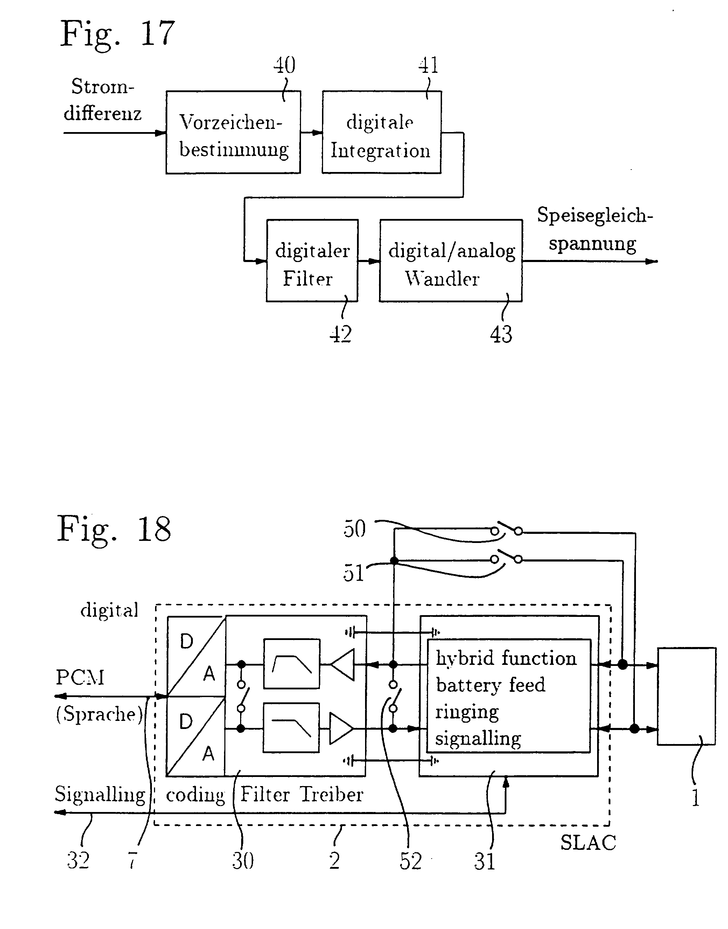

Die Regelschaltung 36 ist, wie aus der Fig. 17 zu ersehen ist, durch eine das Vorzeichen des Ausgangssignales des Komparators erkennende Schaltung 40, einem dieser nachgeschalteten digitalen Integrator 41, einem diesem nachgeschalteten digitalen Filter 42 und einem diesem nachgeschalteten Digital/Analog-Wandler 43 gebildet. dessen Ausgangssignal die Speisegleichspannung für den Teilnehmer bildet.

Die Fig. 18 zeigt Schalter 50, 51, die mit den zu einem Teilnehmer 1 führenden Leitungen angeschlossen sind und die eine Verbindung zu einem Sprachkanal ermöglichen. Weiter ist noch ein Schalter 52 vorgesehen. Durch diese Schalter 50 bis 52 können die durch die Meß-, Regel- oder Steuerschaltung (in der Fig. 18 nicht dargestellt) ermittelten Werte zum Wählamt übertragen werden.

Die Signalisierungsinformation wird zusätzlich zur komprimierten (3 bis 4 Teilnehmer) oder nicht komprimierten (2 Teilnehmer) Sprachinformation digital über die Leitung (6) übertragen bis zum Multiplexer/Demultiplexer 4 am anderen Ende. Dort werden Sprach- und Signalisierungsdaten wieder getrennt, die Sprachdaten fallweise im Dekompressor 3' dekomprimiert (bei mehr als 2 Teilnehmern) und beide getrennt den SLACs 2' oder den Teilnehmerschaltungen 13 zugeführt. In den SLACs 2' findet die komplementäre Signalisierungsfunktion zu den SLACs 2 statt: Während in SLACs 2 das Abheben (Schließen des Gabelkontaktes) erkannt werden muß, muß in SLACs 2' das Schließen des Kontaktes durch einen Schalter (Relais oder Transistor) nachgebildet werden. Während in SLACs 2' ein Gebührenimpuls erkannt werden muß, wird in SLACs 2 ein möglichst ähnlicher Impuls erzeugt und an den Teilnehmer 1 gesendet. Und während schließlich in SLACs 2 das Telefon des Teilnehmers mit Energie versorgt werden muß, muß in SLACs 2' möglichst dieselbe Energie verbraucht werden, um dem Wählamt zu simulieren, daß ein Telefon angeschlossen ist.

Im Fall, der in Fig.3 und 6 illustriert ist, werden die digitalen Signalisierungsinformationen so wie die PCM-Sprachinformationen von der Schaltgruppe 13 direkt an die digitale Vermittlung weitergereicht. Es fehlt somit auch in Figur 2, 3, 5, 6 jeweils eine logische Verbindung von den Multiplexern/Demultiplexern 4' zu den Schaltgruppen 2' oder 13.

So wie die Signalisierungsinformation von den SLACs (2 bzw. 2+20) bis zu den Schaltgruppen 2' bzw. 13 übertragen wird, ist auch ein weiterer Pfad für die Maintenanceinformationen vorgesehen. Auf der ISDN-Übertragungsstrecke (6) können 128kBit/sec (ist gleich 4*32kBit oder 2*64kBit oder 2*32kBit+64kBit ensprechend 4 komprimierten, zwei unkomprimierten oder zwei komprimierten und einem unkomprimierten Sprachkanal) plus 32kBit/sec für Signalisierung und Maintenance (z.B. 16kBit/sec + 16kBit/sec) übertragen werden.

Während in den Teilnehmerschaltungen 13 die digitale Maintenanceinformation direkt an die digitale Vermittlung weitergereicht werden kann, wo sie auch ausgewertet werden muß, sind die Schaltgruppen 2' für die Maintenanceinformation bei den Ausführungen gemäß den Fig.1 bis 13 Endstation. Die analogen Leitungen zwischen 2' und 11 können zwar Sprache und Signalisierung übertragen, jedoch kaum die Maintenanceinformation. Nach der Erfindung sind alle Schaltgruppen 2' digital verbunden und eine Auswerteschaltung ist an diese gemeinsame Leitung angeschlossen. Damit ist zwar die Fehlersuche nicht voll in der Vermittlung integriert, aber doch sehr komfortabel im Wählamt möglich.Auch die Maintenanceinformationen werden in beiden Richtungen übertragen. Während in Richtung Teilnehmer Abfragekommandos gesendet, und die Schalter 50 bis 52 fernaktiviert oder durch Selbsttests fernausgelöst werden, werden in die andere Richtung Meßresultate und Ergebnisse der Selbsttests übermittelt.

Nach der Fig.14 oder 15 können vorhandene Schaltungsteile mehrfach benutzt werden, z.B. der Digital/Analog-Wandler 30, der mit einer Codiereinrichtung versehen ist, um im Testmodus nicht die Sprachspannung von der 4-Drahtleitung sondern die Spannung zwischen den beschriebenen Punkten zu messen und analog/digital zu wandeln. Alle Schaltungsvorgänge im SLAC 2 können entweder über gesteuerte mechanische Schalter (Relais) oder über elektronische Schalter 50 bis 52 (Schalttransistoren, MOSFETs) durchgeführt werden. In der anderen Signalrichtung könnte der Wandler 30 auch dazu verwendet werden, um Testsignale zu erzeugen, die ebenfalls über Schalter in verschiedene Punkte der Schaltung injiziert werden können; z.B. in einen Draht der 2-Drahtleitung oder in beide Drähte gleichzeitig.

Nach der Fig.16 existieren Regelschleifen in der Schaltung um eine Größe, z.B. Speisestrom, konstant zu halten. Die Regelschleifen 36 müssen eine Erfassung der Istgröße enthalten, da mit einer Sollgröße verglichen werden muß. Oft liegt die Regelgröße in digitaler Form vor und es findet ein D/A Konverter Verwendung, der das in der Regelschleife benötigte analoge Signal erzeugt. Der Digitalwert im Regler ist ein Abfallprodukt und kann als Maß für die Streckencharakteristik, z.B. momentaner Widerstand, bei Bedarf oder laufend über den Maintenance-Kanal an das Wählamt gesendet werden.

Als Beispiel möge eine sehr wichtige Regelschleife zur Einstellung des Speisegleichstromes für das angeschlossene Telefon 1 dienen. Mit ein paar kleinen Modifikationen, umschaltbarer Sollstrom, verstellbare Regelzeitkonstanten, lassen sich bereits die meisten der notwendigen Meßresultate erhalten. Die Überlagerung von Signalwechselspannung und Speisegleichspannung wurde der Einfachheit halber mit einem Transformator 38 und Trennkondensator 39 realisiert. Sie könnte aber auch genausogut durch einfache Serienschaltung von potentialfreien Spannungsquellen durchgeführt werden.

Die Regelstrecke ist der sich im Betrieb verändernde Widerstand von Leitung und Teilnehmer. Dieser Widerstand führt zu einem Stromfluß, der laufend mit dem Sollstrom verglichen werden muß. Dazu ist der Komparator 40 vorgesehen, der laufend das Vorzeichen der Differenz ermittelt. Ein digitaler Integrator 41 ist ein Hinauf- und Hinunterzähler der vom Vorzeichen gesteuert wird. Die Filterschaltung 42 bestimmt die Zeitkonstante der Regelung. Das digitale Ergebnis des Filters 42 wird im D/A Wandler 43 in die Speisegleichspannung für das Telefon verwandelt. Der Digitalwert am Eingang des Digital/Analog-Wandlers 43 stellt sich so jederzeit auf den Wert der Spannung ein, die anliegen muß, um den Sollstrom fließen zu lassen. Diese Spannung dividiert durch den Sollstrom stellt den ohmschen Widerstand der Leitung samt angeschlossenem Telefon dar und muß nur mehr zum Wählamt übertragen werden.

Mit den Schaltern 50 bis 52 (Fig.18) ergeben sich Schleifen, die über den Maintenance-Kanal vom Wählamt aus angefordert. und durch vorzugsweise elektronische Schalter (MOSFETs) an verschiedenen Stellen aktiviert werden können. Der Effekt ist der, daß man im Wahlamt zum Beispiel bei laufenden Gesprächen auf einem anderen Anschluß testweise mithören oder auch mitsprechen kann, oder Spannungssignale oder Stromsignale von verschiedenen Punkten des Übertragungsweges verfolgen oder in diesen Punkten auch gezielt stimulieren kann. Die Schleifen benötigen immer neben dem Maintenance-Kanal auch den Sprechkanal für die Auswertung, da nur dieser die für die Übertragung notwendige Bandbreite hat. Sollen Ströme zurückgeschliffen werden, ist ein Einsatz von Strom/Spannungswandlern zweckmäßig.

## Patentansprüche

1. Nachrichtenübertragungssystem, insbesondere Telefonsystem, bei dem Teilnehmer (1) über eine Leitung (7) mit einem Wählamt verbindbar sind, wobei am wählamtseitigen und am teilnehmerseitigen Ende der Leitung je ein bidirektionaler Multiplexer bzw. Demultiplexer (4, 4') über eine ebenfalls bidirektionale Modemschaltung (5, 5'; 18, 18') angeschaltet ist, die die Daten entsprechend der vorgesehenen Übertragung moduliert und demoduliert, und daß an die Multiplexer bzw. Demultiplexer (4, 4') gegebenenfalls bidirektionale Kompressor- bzw. Dekompressorschaltungen (3, 3'; 17, 17') angeschlossen sind und an denen die Teilnehmer (1) jeweils über einen Vorwärts- und einen Rückwärtskanal und zumindest einem bidirektionalen Analog-Digitalwandler (CODEC), vorzugsweise einen SLAC (2, 2') (bidirektionaler Analog-Digitalwandler (CODEC) (30) mit Teilnehmer-Schnittstellenschaltungen (SLIC) (31)) bzw. eine Vermittlungseinrichtung (11) des Wählamtes über Ansteuerschaltungen angeschlossen sind, **dadurch gekennzeichnet,** daß zwischen jedem Teilnehmer (1) und dem diesem zugeordneten CODEC (30), SLIC (31) bzw. SLAC (2) eine Meß-, Regel- oder Steuerschaltung (33, 34, 36, 37, 38) angeordnet bzw. mit dem CODEC (30), SLIC (31) bzw. SLAC (2) wenigstens zum Teil integriert ist, und daß an den zu den Teilnehmern (1) führenden Leitungen steuerbare Schalter (30, 50, 51, 52) angeschlossen sind, die eine signalmäßige Verbindung des Vorwärtskanals mit dem Rückwärtskanal desselben oder bei Mehrkanallösungen, z.B. eines anderen, Teilnehmers ermöglicht.

2. Nachrichtenübertragungssystem, insbesondere Telefonsystem, bei dem Teilnehmer (1) über eine Leitung (7) mit einem Wählamt verbindbar sind, wobei am wählamtseitigen und am teilnehmerseitigen Ende der Leitung je ein bidirektionaler Multiplexer bzw. Demultiplexer (4, 4') über eine ebenfalls bidirektionale Modemschaltung (5, 5'; 18, 18') angeschaltet ist, die die Daten entsprechend der vorgesehenen Übertragung moduliert und demoduliert, und daß an die Multiplexer bzw. Demultiplexer (4, 4') gegebenenfalls bidirektionale Kompressor- bzw. Dekompressorschaltungen (3, 3'; 17, 17') angeschlossen sind und an denen die Teilnehmer (1) jeweils über einen Vorwärts- und einen Rückwärtskanal und zumindest einem bidirektionalen Analog-Digitalwandler (CODEC), vorzugsweise einen SLAC (2, 2') (bidirektionaler Analog-Digitalwandler (CODEC) (30) mit Teilnehmer-Schnittstellenschaltungen (SLIC) (31)) bzw. eine Vermittlungseinrichtung (11) des Wählamtes über Ansteuerschaltungen angeschlossen sind, **dadurch gekennzeichnet,** daß zwischen jedem Teilnehmer (1) und dem diesem zugeordneten CODEC (30), SLIC (31) bzw. SLAC (2) eine Meß-, Regel- oder Steuerschaltung (33, 34, 16, 37, 38) angeordnet bzw. mit dem CODEC (30), SLIC (31) bzw. SLAC (2) wenigstens zum Teil integriert ist, und daß teilnehmerseitig eines jeden SLAC's (2) ein am Vorwärts- und Rückwärtskanal angeschlossener Koppler (37), vorzugsweise ein Transformator (38) mit Trennkondensator (39) angeordnet ist, der mit der Regelschaltung (36) verbunden ist. die mit einer den Sollgleichstrom mit dem Istgleichstrom vergleichenden Vergleichsschaltung (35), wie z.B. eine Differenzschaltung, ein Komparator oder dgl., verbunden ist.

3. Nachrichtenübertragungssystem nach Anspruch 2, **dadurch gekennzeichnet,** daß die Regelschaltung (36) eine das Vorzeichen des Ausgangssignales der vorgeschalteten Vergleichsschaltung (35) erfassende Schaltung (40), einen dieser nachgeschalteten digitalen Integrator (41), gegebenenfalls ein digitales Filter (42) und einen Digital/Analog-Wandler (43) umfaßt.

4. Nachrichtenübertragungssystem, insbesondere Telefonsystem, bei dem Teilnehmer (1) über eine Leitung (7) mit einem Wählamt verbindbar sind, wobei am wählamtseitigen und am teilnehmerseitigen Ende der Leitung je ein bidirektionaler Multiplexer bzw. Demultiplexer (4, 4') über eine ebenfalls bidirektionale Modemschaltung (5, 5'; 18, 18') angeschaltet ist, die die Daten entsprechend der vorgesehenen Übertragung moduliert und demoduliert, und daß an die Multiplexer bzw. Demultiplexer (4, 4') gegebenenfalls bidirektionale Kompressor- bzw. Dekompressorschaltungen (3, 3'; 17, 17') angeschlossen sind und an denen die Teilnehmer (1) jeweils über einen Vorwärts- und einen Rückwärtskanal und zumindest einem bidirektionalen Analog-Digitalwandler (CODEC), vorzugsweise einen SLAC (2, 2') (bidirektionaler Analog-Digitalwandler (CODEC) (30) mit Teilnehmer-Schnittstellenschaltungen (SLIC) (31)) bzw. eine Vermittlungseinrichtung (11) des Wählamtes über Ansteuerschaltungen angeschlossen sind, **dadurch gekennzeichnet,** daß zwischen jedem Teilnehmer (1) und dem diesem zugeordneten CODEC (30), SLIC (31) bzw. SLAC (2) eine Meß-, Regel- oder Steuerschaltung (33, 34, 36, 37, 38) angeordnet bzw. mit dem CODEC (30), SLIC (31) bzw. SLAC (2) wenigstens zum Teil integriert ist, und daß in jedem SLAC (2) zumindest ein Strom- (33) und/oder ein Spannungsmesser (34) integriert ist bzw. sind.

## Claims

1. Information transmission system, in particular a telephone system, in which subscribers (1) can be connected to an automatic exchange via a line (7), in which system a bidirectional multiplexer and, respectively, demultiplexer (4, 4') is connected at the automatic exchange and at the subscriber end of the line via an also bidirectional modem circuit (5, 5'; 18, 18') which modulates and demodulates data in accordance with the intended transmission, and that, if necessary, bidirectional compressor and, respectively, decompressor circuits (3, 3'; 17, 17') are connected to the multiplexers and, respectively, demultiplexers (4, 4') and at which the subscribers (1) are in each case connected via a forward channel and a backward channel and at least one bidirectional analog/digital converter (CODEC), preferably a SLAC (2, 2') (bidirectional analog/digital converter (CODEC) (30) with subscriber line interface circuits (SLIC) (31)) and, respectively, a switching facility (11) of the automatic exchange are connected via drive circuits, characterized in that between each subscriber (1) and its associated CODEC (30), SLIC (31) or, respectively, SLAC (2), a measuring and control circuit (33, 34, 36, 37, 38) is arranged or, respectively, at least partially integrated with the CODEC (30), SLIC (31) or, respectively, of SLAC (2), and that at the lines leading to the subscribers (1) controllable switches (30, 50, 51, 52) are connected which provide the possibility of a signal connection of the forward channel to the backward channel of the same subscriber or, in the case of multi-channel solutions, for example, of another subscriber.

2. Information transmission system, in particular a telephone system, in which subscribers (1) can be connected to an automatic exchange via a line (7), in which system a bidirectional multiplexer and, respectively, demultiplexer (4, 4') is connected at the automatic exchange and at the subscriber end of the line via an also bidirectional modem circuit (5, 5'; 18, 18') which modulates and demodulates data in accordance with the intended transmission, and that, if necessary, bidirectional compressor and, respectively, decompressor circuits (3, 3'; 17, 17') are connected to the multiplexers and, respectively, demultiplexers (4, 4') and at which the subscribers (1) are in each case connected via a forward channel and a backward channel and at least one bidirectional analog/digital converter (CODEC), preferably a SLAC (2, 2') (bidirectional analog/digital converter (CODEC) (30) with subscriber line interface circuits (SLIC) (31)) and, respectively, a switching facility (11) of the automatic exchange are connected via drive circuits, characterized in that, between each subscriber (1) and its associated CODEC (30), SLIC (31) or, respectively, SLAC (2), a measuring and control circuit (33, 34, 36, 37, 38) is arranged or, respectively, at least partially integrated with the CODEC (30), SLIC (31) or, respectively, SLAC (2), and that at the subscriber end of each SLAC (2), a coupler (37), connected to the forward and backward channel, preferably a transformer (38) with isolating capacitor (39) is arranged which is connected to the control circuit (36) which is connected to a comparing circuit (35), such as, for example, a differential circuit, a comparator or the like, comparing the nominal direct current with the actual direct current.

3. Information transmission system according to Claim 2, characterized in that the control circuit (36) comprises a circuit (40) detecting the sign of the output signal of the preceding comparing circuit (35), a digital integrator (41) following the circuit (40), a digital filter (42), if necessary, and a digital/analog converter (43).

4. Information transmission system, in particular a telephone system, in which subscribers (1) can be connected to an automatic exchange via a line (7), in which system a bidirectional multiplexer and, respectively, demultiplexer (4, 4') is connected at the automatic exchange and at the subscriber end of the line via an also bidirectional modem circuit (5, 5'; 18, 18') which modulates and demodulates data in accordance with the intended transmission, and that, if necessary, bidirectional compressor and, respectively, decompressor circuits (3, 3'; 17, 17') are connected to the multiplexers and, respectively, demultiplexers (4, 4') and at which the subscribers (1) are in each case connected via a forward channel and a backward channel and at least one bidirectional analog/digital converter (CODEC), preferably a SLAC (2, 2') (bidirectional analog/digital converter (CODEC) (30) with subscriber line interface circuits (SLIC) (31)) and, respectively, a switching facility (11) of the automatic exchange are connected via drive circuits, characterized in that between each subscriber (1) and its associated CODEC (30), SLIC (31) or, respectively, SLAC (2), a measuring and control circuit (33, 34, 36, 37, 38) is arranged or, respectively, at least partially integrated with the CODEC (30), SLIC (31) or, respectively, SLAC (2), and that at least one current meter (33) and/or one voltage meter (34) is or are integrated in each SLAC (2).

## Revendications

1. Système de transmission d'informations, en particulier système téléphonique, dans lequel des abonnés (1) sont susceptibles d'être reliés, par une ligne (7), à un central automatique, où, à l'extrémité située côté central automatique et à l'extrémité, située côté abonné, de la ligne, sont respectivement branchés un multiplexeur et un démultiplexeur bidirectionnel (4, 4'), un circuit modem (5, 5'; 18, 18') également bidirectionnel, qui module et démodule les données de manière correspondante à la transmission prévue, et, aux multiplexeur, respectivement démultiplexeur (4, 4'), sont raccordés des circuits compresseur, respectivement décompresseur (3, 3', 17, 17'), le cas échéant bidirectionnels, et auxquels les abonnés (1) sont chacun raccordés, par l'intermédiaire d'un canal aller et un canal retour et par au moins un convertisseur analogique-numérique bidirectionnel (CODEC), de préférence un SLAC (2, 2') (convertisseur analogique-numérique bidirectionnel (CODEC) (30) équipé de circuits d'interface d'abonnés SLIC (31)), respectivement un équipement de commutation (11) appartenant au central automatique, par l'intermédiaire de circuits de commande, caractérisé par le fait que, entre chaque abonné (1) et le CODEC (30), le SLIC (31) ou le SLAC (2) qui lui est associé, est disposé un circuit de mesure, de régulation, ou de commande (33, 34, 36, 37, 38), respectivement est intégré au moins en partie au CODEC (30), au SLIC (31) respectivement au SLAC (2), et que, aux lignes menant aux abonnés (1) sont raccordés des commutateurs (30, 50, 51, 52) susceptibles d'être commandés, qui permettent d'établir une liaison de signalisation du canal aller avec le canal retour venant du même abonné ou bien, en cas de solutions à plusieurs canaux, par exemple d'un autre abonné.

2. Système de transmission d'informations, en particulier système téléphonique, dans lequel des abonnés (1) sont susceptibles d'être reliés, par une ligne (7), à un central automatique, où, à l'extrémité située côté central automatique et à l'extrémité, située côté abonné, de la ligne, sont respectivement branchés un multiplexeur ou un démultiplexeur bidirectionnel (4, 4'), un circuit modem (5, 5'; 18, 18') également bidirectionnel, qui module et démodule les données de manière correspondante à la transmission prévue, et, aux multiplexeur, respectivement démultiplexeur (4, 4'), sont raccordés des circuits compresseur, respectivement décompresseur (3, 3', 17, 17'), le cas échéant bidirectionnels, et auxquels les abonnés (1) sont chacun raccordés, par un canal aller et un canal retour et par au moins un convertisseur analogique-numérique bidirectionnel (CODEC), de préférence un SLAC (2, 2') (convertisseur analogique-numérique bidirectionnel (CODEC) (30) équipé de circuits d'interface d'abonnés SLIC (31)), respectivement un équipement de commutation (11) appartenant au central automatique, par des circuits de commande, caractérisé par le fait que, entre chaque abonné (1) et le CODEC (30), le SLIC (31) ou le SLAC (2) qui lui est associé, est disposé un circuit de mesure, de régulation, ou de commande (33, 34, 36, 37, 38), respectivement est intégré au moins en partie au CODEC (30), au SLIC (31) respectivement au SLAC (2), et, du côté abonné de chaque SLAC (2) est disposé un coupleur (37), raccordé au canal aller et au canal retour, de préférence un transformateur (38) équipé d'un condensateur de séparation (39) et relié au circuit de régulation (36), qui est relié à un circuit comparateur (35), tel que par exemple un circuit différentiateur, un comparateur, ou analogue, qui effectue une comparaison entre le courant continu de consigne et le courant continu réel.

3. Système de transmission d'informations selon la revendication 2, caractérisé par le fait que le circuit de régulation (36) comprend un circuit (40) appréhendant le signe du signal de sortie du circuit comparateur (35) branché en amont, un intégrateur numérique (41) branché en aval de ce circuit (40), le cas échéant un filtre numérique (42) et un convertisseur analogique/numérique (43).

4. Système de transmission d'informations, en particulier un système téléphonique, dans lequel des abonnés (1) sont susceptibles d'être reliés à un central automatique, par une ligne (7), où, à l'extrémité située côté central automatique et à l'extrémité, située côté abonné, de la ligne, sont respectivement branchés un multiplexeur et un démultiplexeur bidirectionnel (4, 4'), par un circuit modem (5, 5'; 18, 18') également bidirectionnel, qui module et démodule les données de manière correspondante à la transmission prévue, et qu'aux multiplexeur, respectivement démultiplexeur (4, 4'), sont raccordés des circuits compresseur, respectivement décompresseur (3, 3', 17, 17'), le cas échéant bidirectionnels, et auxquels les abonnés (1) sont raccordés respectivement par un canal aller et un canal retour et au moins un convertisseur analogique-numérique bidirectionnel (CODEC), de préférence un SLAC (2, 2') (convertisseur analogique-numérique bidirectionnel (CODEC) (30) avec des circuits d'interface d'abonnés SLIC (31)), respectivement un équipement de commutation (11) appartenant au central automatique, par des circuits de commande, caractérisé par le fait que, entre chaque abonné (1) et le CODEC (30), le SLIC (31) ou le SLAC ( 2) qui lui est associé, est disposé un circuit de mesure, de régulation, ou de commande (33, 34, 36, 37, 38), respectivement est intégré au moins en partie au CODEC (30), au SLIC (31) ou au SLAC (2), et que dans chaque SLAC (2) est/sont intégrés au moins un appareil de mesure d'intensité (33) et/ou un appareil de mesure de tension (34).
